# EUROPEAN PATENT SPECIFICATION

(11) **EP 1 262 161 B1**
(45) Date of publication and mention of the grant of the patent: **29.08.2007**
(21) Application number: 01830340.4
(22) Date of filing: 25.05.2001
(51) Int. Cl.: A61J 1/00, B65D 81/18, A01N 1/02

(54) **Device and method for detecting the conservation period and the thermal drift of medical devices, particularly blood bags, organ containers and similar devices**
Gerät und Methode zum Erfassen der Aufbewahrungszeit und Temperaturdrift von medizinischen Geräten, insbesondere Blutbeuteln, Organbehältern und ähnlichen Geräten
Appareil et méthode pour détecter la période de conservation et la dérive thermique de dispositifs médicaux, en particulier poches de sang, récipients pour organes et dispositifs similaires

(43) Date of publication of application: 04.12.2002
(73) Proprietor: Flow Meter S.p.a., 24100 Bergamo (IT)
(72) Inventor: Paratico, Roberto, c/o Flow-Meter S.p.A., 24040 Levate (IT)
(74) Representative: Botti, Mario

(56) References cited:
- WO-A-00/42969
- FR-A- 2 786 876
- "Thermochron iButton" 5 December 2000 (2000-12-05), DALLAS SEMICONDUCTOR , HTTP://WEB.ARCHIVE.ORG/WEB/20001205135200/ HTTP://WWW.IBUTTON.COM/IBUTTONS/THERMOCHRO N.HTML * the whole document *

## Description

### Application field

The present invention relates to a medical device having an improved structure as defined in the preamble of claim 1. The invention further relates to a method of monitoring preservation terms and thermal drift in the above medical device.

### Background Art

As it is well known in this particular technical field, many medical devices are designed to contain and preserve, at low or very low temperatures, organic materials likely to become deteriorated.

This is the case of hematic bags, filled with plasma or plasma derivatives, and organ containers designed for convenient transport.

It is vitally important that such medical devices be maintained at a near-constant low temperature, both during storage and transport.

Low temperature is of vital importance in order to maintain the device intact at the moment of use and/or to reach its destination with its characteristics unaltered. In other words, the contents of these medical devices is to retain its characteristics with time, as it is also imposed for by official standards.

For the purpose, apart from routine precautions in storing and/or transporting such medical devices, no checking for possible anomalous conditions, as may arise during the storage period or in transit, is currently provided.

Some solutions are known for monitoring the thermal condition of a medical device within specifications.

For example, the patent application WO/0042969 relates to a method, and a corresponding medical device, for controlling quality and for identifying a liquid medium stored in a container, preferably a plastic bag. On the plastic bag is fixed a pouch being in contact with the interior of the container, and in said pouch are disposed sensors for measuring temperature. Moreover, a processor unit of integrated circuit is connected to the sensors. Temperature measurements are periodically performed by means of electrical supply and recorded in a storage unit of said integrated circuit. In particular, the electrical power supply for doing each measurement is effected inductively from the outside.

Also, the document FR 2 786 876 relates to a refrigerated cabinet for the storage of products, which cabinet is fitted with an opening for the introduction and removal of products, and means for monitoring the contents of the cabinet which comprise a radio-frequency receiver connected to an antenna. The products are provided with a radio-frequency identification labels comprising a microcomputer. The antenna is located in the vicinity of the cabinet opening to enable detection of the movements of the products by radio-interaction. A method for performing reliable temperature measures is not described nor suggested.

The document http://web.archive.org/web/20001205135200/http://www.ibutton.com/ibuttons/thermochron.html forms the basis of the preamble of claim 1.

Although such documents disclose medical devices equipped with thermal sensor means, they fail to teach how to obtain a safe and simple reading, and also reliable checking operations, of the temperature value.

The technical problem underlying this invention concerns the possibility of providing an improved medical device for guaranteeing a reliable check of the preservation terms, thermal drift, and identity of medical devices.

The technical problem is also to provide a method of detecting the outset and duration of thermal drift in medical devices that require to be kept at specified constant temperatures. The method must also have functional features such to guarantee a particularly effective check that would not rely on the availability of skilled operators.

### Summary of the Invention

The principle on which this invention stands is to have each medical device equipped with an electronic non-volatile memory unit having an unalterable portion in which data and parameters of initial device identification are stored, and having a write portion in which variations in temperature or preservation terms of the medical device contents are automatically recorded. In this way, the device and its original state can be monitored in a reliable manner, and a log of thermal fluctuations in the device, e.g. undergone in transit, can be recorded.

Based on this principle, the technical problem is solved by a medical device, as defined in Claim 1.

The technical problem is further solved by a method as defined in Claim 10.

The features and advantages of the method and the device of this invention will be apparent from the following description of embodiments thereof, given by way of non-limitative examples with reference to the accompanying drawings.

### Brief Description of the Drawings

- Figure 1 shows a perspective view of a medical device, which has been modified to implement the method of this invention.
- Figure 2 shows a perspective view of another type of improved medical device according to the present invention.
- Figure 3 shows a schematic sectional view of a detail of the medical device shown in Figure 2.

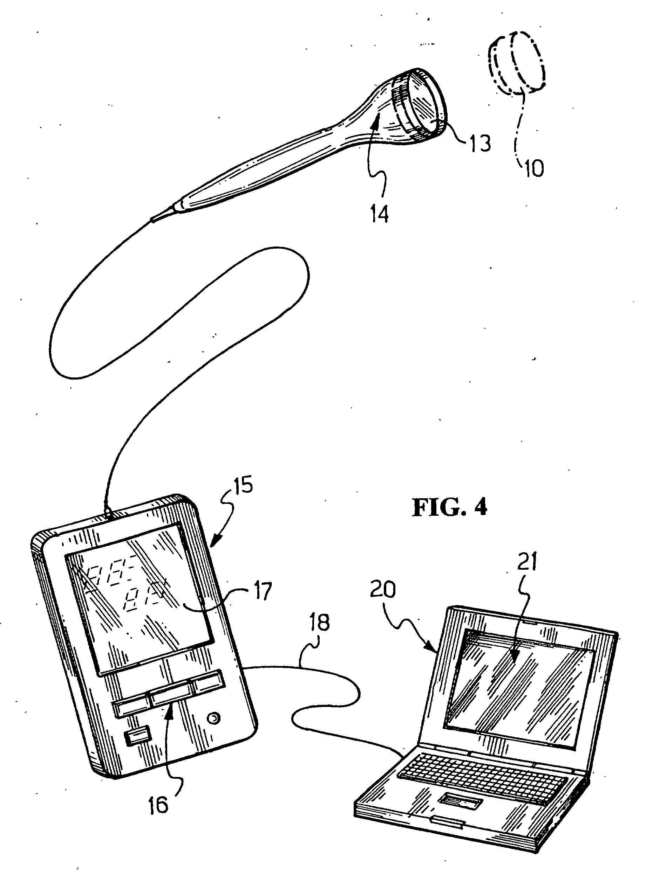

- Figure 4 shows a schematic diagram of an electronic apparatus useful to implement the method of this invention.
- Figure 5 shows a schematic view of a PC screen display referring to an operating function of the inventive method.

### Detailed Description

With reference to the drawing views, a medical device, which has been improved according to this invention such that its preservation terms and any thermal drift that may have occurred in transit, for example, can be monitored, is generally and schematically shown at 1 in schematic form.

The medical device 1 can also be identified and traced back by the method of the invention.

In a preferred embodiment, the device 1 is a hematic bag 3, which may contain plasma 4 or plasma derivatives, for example.

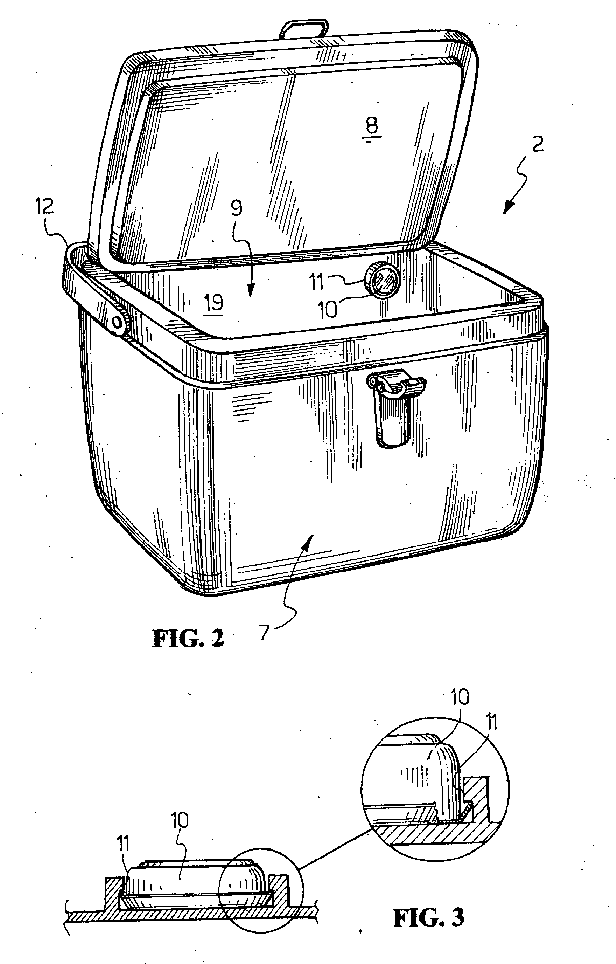

In a second embodiment, to be described in relation to Figure 2, the device 1 is an organ container, e.g. a container for graft organs.

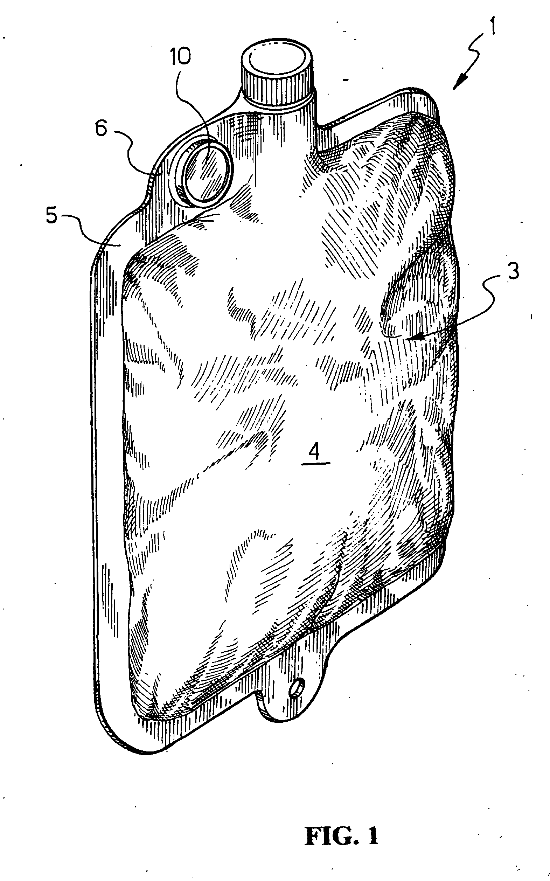

In the embodiment described here by way of example and not of limitation with reference to Figure 1, the hematic bag 3 is of the limp type made out of a plastics material and formed with a stiffened perimetric ribbing 5.

The bag 3 allows plasma to be safely preserved and transported, usually at a temperature below 0°C. The low preservation temperature is provided by the cabinet where the bag 3 is stored.

For thoroughness' sake, it can be mentioned that the bag 3 comprises a plasma inlet opening, conventionally sealed with a tight stopper.

Advantageously in this invention, the medical device 1 is equipped with a non-volatile memory unit 10, which is closely associated with the bag 3 and housed in a peripheral portion of the bag 3, such as a widening 6 of the ribbing 5.

The memory unit 10 is a button-type non-volatile memory incorporating a temperature sensor, e.g. of the model referenced in the market with Thermocron iButton DS1921 by Messrs. Dallas Semiconductor.

This button-type memory has a dedicated memory portion for logging temperature variations against time. It is important to observe that the memory unit 10 is supplied by external induction power for certain read and write operations, and requires no electric power supply.

The memory unit 10 is in the form of a flat disc, being only 6 mm thick and having a diameter of about 15 mm. A flat active surface of the button memory 10 can be accessed for reading and checking the memory contents, as explained hereinafter.

Advantageously, the memory unit 10 is also adapted to store identification data of the medical device 1 in an unerasable manner. Of special significance among such data is an identification of the device manufacturer.

In a preferred embodiment, the memory unit 10 is a read/write non-volatile memory, such as an EPROM, EEPROM, or flash EEPROM, that allows the data contained therein as well as fresh data about temperature variations undergone by the device 1 during storage or in transit to be stored.

The particular example shown in Figure 2 is a container 2 for organs, as for example explanted organs to be grafted, which container is substantially in the form of a portable case 7 having a closing lid 8 and a carrying handle 12. This container 2 also falls in the broad category of medical devices.

A core chamber 9 is defined in the container 2 and is maintained cool, as it is conventionally done with organ containers.

Here again, the memory unit 10 is housed in a respective seat 11 formed in a sidewall 19 of the core chamber 9 inside the container 2. Rather than in the core chamber 9, the seat 11 could be provided, for example, in the lid 8, depending on the design of the medical device.

As it is shown in Figure 3, the seat 11 is a circular socket of predetermined depth and diameter into which the memory 10 is pressure force fitted such that it cannot be removed without tampering with the medical device. In other words, any attempts at intruding or removing the memory unit 10 would leave evident signs of the medical device 1 having been tampered with in the region of the seat 11.

What does matter in this invention is that the memory unit 10 can not be removed out of the medical device also in this kind of containers, 2.

According to the invention, the read/write electric pulses to the memory 10 are transferred to the latter through a supply interface 15 arranged to interact with the memory 10 for the time strictly required for such data read and write operations to be completed. The interface 15 may be a palm top computer, i.e. a small electronic card controlled by a microprocessor and mounted inside a plastics container that also houses a keypad 16 and a display 17.

More particularly, the palm top computer 15 is supplied a DC voltage from rechargeable batteries, and includes a connector for connection to an external power supply for renewal of the battery charge, a connector for a contact probe 14 for contacting said memory unit 10, and a connector 18 for a serial interface of the RS232 type. The palm top computer 15 comprises an internal working memory, bidirectionally communicated to the microprocessor, and a number of interfaces for the keypad 16, the display 17, the probe 14, and said serial interface.

The palm top computer 15 is used in implementing the method of this invention, and in particular, to check the preservation time and any thermal drift in the medical devices 1, 2. Of course, it would be possible to dispose a conditional access by using a password or a non-volatile memory (EPROM), so that the computer 15 is only available to authorized personnel.

An operator is simply to make contact with the tip 13 of a probe 14 to directly read the contents of the memory unit 10 installed in the medical device 1.

In this way stored data is read from the memory 10. The data may include: a product serial number, a product code, a primary product batch, a secondary product batch, the date of manufacture, the initial preservation temperature, any temperature variations, the moment when the variations occurred, the name of the operator who set the initial check of the preservation temperature, the name of the manufacturer, and some remarks. Obviously the data may be suitably encoded in order to reduce the area occupation in the memory unit 10 and inside the palm top computer 15.

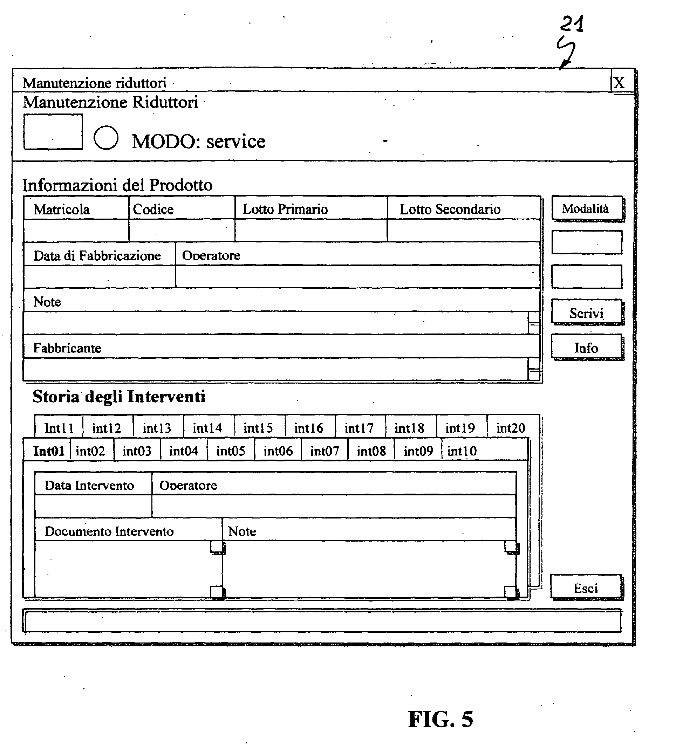

Once the inspecting operator has read the set of data stored in the memory unit 10 using the palm top computer 15, the data may be dumped into a PC, e.g. a portable PC 20, for more convenient examination and handling of the same, as shows the screen display 21 of Figure 5. This operation would be performed only by skilled technicians, authorized by the manufacturer to carry out the check of the individual medical devices.

For example, as it is shown in figure 5, the maintenance operator can command a complete view of all the data read from the memory 10. Using simple program instructions, the operator can enter new identification data, transfer the data to the palm top computer 15, receive identification and technical data from the palm top computer 15, have the data displayed in any desired order, control data printouts, and profit from help-on-line functions.

A suitable program language, e.g. Visual Basic, will allow every detail of the graphic interface, as well as the controls available for recording the kind of checking operation performed, to be defined by the operator.

Once the maintenance operator has entered the data about the performed maintenance operation in the palm top computer 15, the memory unit 10 is again contacted through the free end 13 of the probe 14 to quickly store the information into the unit 10.

Thus, the method of this invention allows the thermal pattern to be recorded, that the medical device 1, 2 has shown during all the storage and/or transport cycle.

Also, the inventive method allows an historical record of the authorized technical and checking operations performed through the life of the medical device to be recorded.

The method and medical device according to this invention are uniquely simple and effective, and do solve the technical problem of having the thermal integrity of medical devices containing organic material ascertained.

The added cost brought about by the improved medical devices of this invention is trivial, represents but a trifling proportion of the overall cost, and is fully paid back by the prompt response and reliability of the retrieved data.

It will be appreciated that the invention can be applied to any medical devices comprising a container for organic material requiring their running or operating thermal state to be monitored, as claimed in the following claims.

## Claims

1. A medical device (1,2), comprising a container (3, 7) for organic material, such as a hematic bag or an organ container, and an electronic non-volatile memory unit (10) embedded in said container (3, 7) and having an unerasable portion, in which special significant data are stored, and a write portion, wherein said memory unit is a memory button (10) incorporating a thermal sensor which is adapted for automatically recording any temperature variation against time in said write portion of the memory unit (10) so as to obtain a thermal pattern recording, said memory being suitable to store identification data and a preservation schedule for the medical device (1), **characterized in that** the container (3,7) is provided with an anti-tampering seat (11) into which the memory button (10) is pressure force fitted.

2. A device according to Claim 1, **characterized in that** said memory button (10) is embedded in a perimetric wall (5) of the medical device (3).

3. A device according to Claim 1, **characterized in that** said memory button (10) is housed in a widening (6) of a ribbing (5) of the hematic bag (3).

4. A device according to Claim 1, **characterised in that** the seat (11) is formed in a sidewall (19) of a core chamber (9) inside the container (2).

5. A device according to Claim 1, **characterised in that** the seat (11) is formed in a lid (8) of the container (2).

6. A device according to claim 1, **characterized in that** said memory button (10) has an active contact surface accessible by a contact probe (14) of a supply interface (15) for reading and checking the information and the thermal pattern recording stored within said memory button (10).

7. A device according to Claim 1, **characterized in that** the power supply to said memory unit (10) is externally induced.

8. A device according to Claim 1, **characterized in that** said memory button (10) is of the EPROM or EEPROM type.

9. A device according to Claim 6, **characterized in that** said supply interface (15) is a palm top computer.

10. A method of monitoring preservation terms and thermal drift in medical devices (1,2), comprising a container (3,7) for organic material, such as hematic bags or organ containers or the like, comprising the steps of:
- providing the medical device with an anti-tampering seat (11)
- providing the device (1,2) with an electronic non-volatile memory unit (10) incorporating a thermal sensor adapted to enter temperature variations against time in the memory;
- pressure force fitting the memory unit (10) in the seat (11);
- storing identification data and a preservation schedule for the medical device (1,2) into said memory unit (10);
- automatically recording any variation in temperature of the medical device contents in the memory unit (10)so as to obtain a thermal pattern recording;
- contacting the memory unit (10);
- reading the thermal pattern recording stored within said memory unit (10);
- performing a check on the device preservation time and thermal drift based on said thermal pattern recording;
said contacting step being performed strictly for the time required to complete said data reading and checking steps.

11. A method according to claim 10, **characterized in that** said data reading and cheeking steps are performed by a contact probe (14) of an interface (15) through an accessible active contact surface of said memory unit (10).

12. Method according claim 10, **characterized** it also comprises a step of further contacting the memory unit (10)strictly for the time to store fresh data regarding reading and checking operations.

13. A method according to Claim 10, **characterized in that** it comprises a subsequent step of writing data into said memory unit (10) to store fresh data about the outcome of the checking step.

14. A method according to Claim 13, **characterized in that** in said subsequent step of writing data the fresh data is stored additionally to existing data in the memory unit (10).

## Patentansprüche

1. Medizinische Vorrichtung (1, 2) mit einem Behälter (3, 7) für organisches Material, wie z.B. einen Blutbeutel oder einen Organbehälter, und einer elektronischen, nichtflüchtigen Speichereinheit (10), die in den Behälter (3, 7) eingelassen ist und einen nicht löschbaren Abschnitt aufweist, in dem spezielle, wichtige Daten gespeichert sind, und einen Schreibabschnitt, wobei es sich bei der Speichereinheit um eine Speicherzelle (10) handelt, die einen Wärmesensor beinhaltet, welcher dazu ausgelegt ist, jegliche mit der Zeit auftretende Temperaturschwankung im Schreibabschnitt der Speichereinheit (10) automatisch aufzuzeichnen, um so eine Aufzeichnung des Wärmeprofils zu erhalten, wobei der Speicher dazu geeignet ist, Kennungsdaten und einen Aufbewahrungsplan für die medizinische Vorrichtung (1) abzuspeichern, **dadurch gekennzeichnet, dass** der Behälter (3, 7) mit einer manipuliersicheren Aufnahme (11) versehen ist, in die die Speicherzelle (10) mit Kraft eingedrückt ist.

2. Vorrichtung nach Anspruch 1, **dadurch gekennzeichnet, dass** die Speicherzelle (10) in eine Umfangswand (5) der medizinischen Vorrichtung (3) eingelassen ist.

3. Vorrichtung nach Anspruch 1, **dadurch gekennzeichnet, dass** die Speicherzelle (10) in einer Verbreiterung (6) eines Wulsts (5) des Blutbeutels (3) aufgenommen ist.

4. Vorrichtung nach Anspruch 1, **dadurch gekennzeichnet, dass** die Aufnahme (11) in einer Seitenwand (19) einer Innenkammer (9) innerhalb des Behälters (2) gebildet ist.

5. Vorrichtung nach Anspruch 1, **dadurch gekennzeichnet, dass** die Aufnahme (11) in einem Deckel (8) des Behälters (2) gebildet ist.

6. Vorrichtung nach Anspruch 1, **dadurch gekennzeichnet, dass** die Speicherzelle (10) eine aktive Kontaktfläche aufweist, die für einen Kontaktkopf (14) einer Anschlussschnittstelle (15) zugänglich ist, um die Informationen und die Aufzeichnung des Wärmeprofils zu lesen und zu prüfen, die in der Speicherzelle (10) gespeichert sind.

7. Vorrichtung nach Anspruch 1, **dadurch gekennzeichnet, dass** die Zufuhr von Energie zur Speichereinheit (10) von außen induziert wird.

8. Vorrichtung nach Anspruch 1, **dadurch gekennzeichnet, dass** die Speicherzelle (10) in der Bauart eines EPROM oder EEPROM vorliegt.

9. Vorrichtung nach Anspruch 6, **dadurch gekennzeichnet, dass** es sich bei der Anschlussschnittstelle (15) um einen Handcomputer bzw. tragbaren Computer handelt.

10. Verfahren zur Überwachung von Aufbewahrungsfristen und einer Temperaturverschiebung in medizinischen Vorrichtungen (1, 2) mit einem Behälter (3, 7) für organisches Material, wie z.B. Blutbeutel oder Organbehälter oder dgl., folgende Schritte umfassend:
- Versehen der medizinischen Vorrichtung mit einer manipuliersicheren Aufnahme (11);
- Versehen der Vorrichtung (1, 2) mit einer elektronischen, nichtflüchtigen Speichereinheit (10), die einen Wärmesensor beinhaltet, der dazu ausgelegt ist, mit der Zeit auftretende Temperaturschwankungen in den Speicher einzugeben;
- mit Kraft erfolgendes Eindrücken der Speichereinheit (10) in die Aufnahme (11);
- Abspeichern von Kennungsdaten und eines Aufbewahrungsplans für die medizinische Vorrichtung (1, 2) in der Speichereinheit (10);
- automatisches Aufzeichnen jeglicher Temperaturschwankungen des Inhalts der medizinischen Vorrichtung in der Speichereinheit (10), um eine Aufzeichnung des Wärmeprofils zu erhalten;
- Kontaktherstellung mit der Speichereinheit (10);
- Auslesen der in der Speichereinheit (10) gespeicherten Aufzeichnung des Wärmeprofils;
- Ausführen einer Prüfung der Vorrichtungsaufbewahrungszeit und der Temperaturverschiebung basierend auf der Aufzeichnung des Wärmeprofils;
wobei der Schritt der Kontaktherstellung genau für die Zeit durchgeführt wird, die erforderlich ist, um die Schritte bezüglich des Lesens und Prüfens der Daten abzuarbeiten.

11. Verfahren nach Anspruch 10, **dadurch gekennzeichnet, dass** Schritte bezüglich des Lesens und Prüfens der Daten mit einem Kontaktkopf (14) einer Schnittstelle (15) über eine zugängliche aktive Kontaktfläche der Speichereinheit (10) ausgeführt werden.

12. Verfahren nach Anspruch 10, **dadurch gekennzeichnet, dass** es auch einen Schritt umfasst, darüber hinaus einen Kontakt mit der Speichereinheit (10) genau für die Zeit herzustellen, um hinsichtlich Lese- und Prüfvorgängen frische Daten abzuspeichern.

13. Verfahren nach Anspruch 10, **dadurch gekennzeichnet, dass** es einen nachfolgenden Schritt umfasst, Daten in die Speichereinheit (10) einzuschreiben, um über das Ergebnis des Prüfschritts frische Daten abzuspeichern.

14. Verfahren nach Anspruch 13, **dadurch gekennzeichnet, dass** in dem nachfolgenden Schritt des Einschreibens von Daten die frischen Daten zusätzlich zu bestehenden Daten in die Speichereinheit (10) eingeschrieben werden.

## Revendications

1. Dispositif (1, 2) à usage médical, comprenant un récipient (3, 7) pour une matière organique, par exemple une poche à sang ou un récipient pour organes, et une unité de mémoire électronique non volatile (10) encastrée dans ledit récipient (3, 7) et comportant une partie non effaçable, dans laquelle sont conservées des données spéciales importantes, et une partie écriture, ladite unité de mémoire étant une mémoire bouton (10) comprenant un capteur thermique, qui est propre à enregistrer automatiquement une variation quelconque de température en fonction du temps dans ladite partie écriture de l'unité de mémoire (10), de manière à obtenir l'enregistrement d'un diagramme thermique, ladite mémoire permettant de conserver des données d'identification et un calendrier de conservation pour le dispositif (1) à usage médical, **caractérisé en ce que** le récipient (3, 7) est pourvu d'un élément de support infraudable (11) dans lequel la mémoire bouton (10) est enfoncée à force par pression.

2. Dispositif selon la revendication 1, **caractérisé en ce que** ladite mémoire bouton (10) est encastrée dans une paroi périphérique (5) du dispositif (3) à usage médical.

3. Dispositif selon la revendication 1, **caractérisé en ce que** ladite mémoire bouton (10) est logée dans un renflement (6) d'une nervure de bord (5) de la poche à sang (3).

4. Dispositif selon la revendication 1, **caractérisé en ce que** l'élément de support (11) est formé dans une paroi latérale (19) d'une chambre centrale (9) du récipient (2).

5. Dispositif selon la revendication 1, **caractérisé en ce que** l'élément de support (11) est formé dans un couvercle (8) du récipient (2).

6. Dispositif selon la revendication 1, **caractérisé en ce que** ladite mémoire bouton (10) comporte une surface de contact actif, accessible par une sonde de contact (14) d'une interface d'alimentation (15) pour la lecture et la vérification des informations et de l'enregistrement du diagramme thermique, conservés dans ladite mémoire bouton (10).

7. Dispositif selon la revendication 1, **caractérisé en ce que** l'alimentation en énergie de ladite unité de mémoire (10) est induite de manière externe.

8. Dispositif selon la revendication 1, **caractérisé en ce que** ladite mémoire bouton (10) est du type EPROM ou EEPROM.

9. Dispositif selon la revendication 6, **caractérisé en ce que** ladite interface d'alimentation (15) est un ordinateur à tenir dans la main.

10. Procédé de surveillance des conditions de conservation et de la dérive thermique dans des dispositifs (1, 2) à usage médical, comprenant un récipient (3, 7) pour une matière organique, par exemple des poches à sang ou des récipients pour organes ou analogues, le procédé comprenant les étapes consistant à :
- pourvoir le dispositif à usage médical d'un élément de support infraudable (11) ;
- pourvoir le dispositif (1, 2) d'une unité de mémoire électronique non volatile (10) comprenant un capteur thermique, propre à entrer, dans la mémoire, des variations de température en fonction du temps ;
- enfoncer à force par pression l'unité de mémoire (10) dans l'élément de support (11) ;
- enregistrer, dans ladite unité de mémoire (10), des données d'identification et un calendrier de conservation pour le dispositif (1, 2) à usage médical ;
- enregistrer automatiquement, dans l'unité de mémoire (10), une variation quelconque de température du contenu du dispositif à usage médical, de manière à obtenir l'enregistrement d'un diagramme thermique ;
- établir un contact avec ladite unité de mémoire (10) ;
- lire l'enregistrement du diagramme thermique, conservé dans ladite unité de mémoire (10) ;
- exécuter une vérification du temps de conservation et de la dérive thermique du dispositif, sur la base dudit enregistrement du diagramme thermique ;
ladite étape d'établissement d'un contact étant effectuée strictement pour la durée requise pour mener à bien lesdites étapes de lecture de données et de vérification.

11. Procédé selon la revendication 10, **caractérisé en ce que** lesdites étapes de lecture de données et de vérification sont exécutées par une sonde de contact (14) d'une interface (15) par l'intermédiaire d'une surface accessible de contact actif de ladite unité de mémoire (10).

12. Procédé selon la revendication 10, **caractérisé en ce qu'**il comprend également une étape d'établissement d'un autre contact avec l'unité de mémoire (10), strictement pour la durée requise pour l'enregistrement de données récentes concernant des opérations de lecture et de vérification.

13. Procédé selon la revendication 10, **caractérisé en ce qu'**il comprend également une étape suivante d'écriture de données, dans ladite unité de mémoire (10), afin d'enregistrer des données récentes concernant le résultat de l'étape de vérification.

14. Procédé selon la revendication 13, **caractérisé en ce que**, dans ladite étape suivante d'écriture de données, les données récentes sont enregistrées dans l'unité de mémoire (10) en plus des données existantes.
